# EUROPEAN PATENT SPECIFICATION

(11) **EP 1 508 588 B1**
(45) Date of publication and mention of the grant of the patent: **12.10.2011**
(21) Application number: 04019979.6
(22) Date of filing: 23.08.2004
(51) Int. Cl.: C08J 9/12

(54) **Foamed dustproof material and dustproof structure containing said material**
Geschäumtes staubdichtes Material und staubdichte, dieses Material enthaltende Anordnung
Materiau en mousse étanche à la poussière et structure étanche à la poussière contenant ledit materiau

(30) Priority: 22.08.2003 JP 2003298409
(43) Date of publication of application: 23.02.2005
(73) Proprietor: NITTO DENKO CORPORATION, Osaka (JP)
(72) Inventor: Saitou, Makoto, Ibaraki-shi Osaka (JP); Takahashi, Nobuyuki, Ibaraki-shi Osaka (JP); Tachibana, Katsuhiko, Ibaraki-shi Osaka (JP)
(74) Representative: Grünecker, Kinkeldey, Stockmair & Schwanhäusser Anwaltssozietät

(56) References cited:
- EP-A- 0 610 953
- EP-A- 1 186 392
- WO-A-02/084918

## Description

### FIELD OF THE INVENTION

The present invention relates to the use of a foamed dustproof material and the use of a dustproof structure using the foamed dustproof material, and more particularly, relates to the use of such a foamed dustproof material that has excellent dustproof property and can successfully follow a minute clearance.

### BACKGROUND ART

A dustproof material has been used upon mounting an image displaying member fixed to an image displaying device, such as a liquid crystal display, an electroluminescence display and a plasma display, and an optical member, such as a camera and a lens, fixed to a portable phone or a portable information device, on a prescribed site, such as a fixing part. A dustproof material has also been used for preventing a toner from leaking from a toner cartridge used in an image forming apparatus, such as a duplicator and a printer.

As the dustproof material, a polyethylene foamed body having closed cells and a foaming factor of about 30 has been used, as well as a fine cell polyurethane foamed body having a low foaming degree and a closed cell structure, and a compressed and molded article of a highly foamed polyurethane.

Specifically, for example, a gasket formed of a polyurethane foamed body having a density of from 0.3 to 0.5 g/cm³ (as described in Patent Document 1) and a sealing material for an electric or electronic device formed of a foamed structure having an average foam diameter of from 1 to 500 µm (as described in Patent Document 2) have been used.

In the conventional image displaying member fixed to an image displaying device, such as a liquid crystal display, an electroluminescence display and a plasma display, and the conventional optical member, such as a camera and a lens, fixed to a potable phone or a portable information device, a part where the dustproof material is applied has a clearance (i.e., a gap or a distance) that is sufficiently large for using the dustproof material without substantial compression. Therefore, there has been no necessity in consideration of the compression repulsive force of the dustproof materials.
[Patent Document 1] JP-A-2001-100216
[Patent Document 2] JP-A-2002-309198

EP - A - 1186392 describes a polypropylene foam having a relative density of 0.077 g/cm³ as well as an average cell diameter of 80µm. A 50% compression load 2.34N/cm² is mentioned. The relative density translates to an apparent density of 0.0693 g/cm³. The foam is obtained by impregnating polypropylene with carbon dioxide at 150°C, and at a pressure of 15 MPa the provision of a pressure sensitive adhesive layer on one or each side of the expanded material is described. The foam is used as a soundproofing material.

EP - A - 0610953 describes a thermoplastic foamed article. A polystyrene foam is disclosed which has an average cell diameter of 25 µm and a density of 0.078g/cm³.

### SUMMARY OF THE INVENTION

In recent years, however, a product having an optical member (such as an image displaying device, a camera and a lens) installed therein is becoming to have a thin profile, and associated thereto, the clearance of the part where the dustproof material is applied tends to be decreased. More recently, such a situation occurs that a conventional dustproof material having been used cannot be applied due to the large repulsive force thereof. Accordingly, such a dustproof material is being demanded that exerts excellent dustproof property and has excellent flexibility capable of following a minute clearance.

The gasket disclosed in JP-A-2001-100216 (i.e., a gasket formed with a polyurethane foamed material having a density of from 0.3 to 0.5 g/cm³) prevents a liquid crystal display from jolting by suppressing the foaming factor thereof, but is still insufficient in flexibility and buffering property.

The sealing material for an electric or electronic device disclosed in JP-A-2002-309198 (i.e., the sealing material for an electric or electronic device formed of a foamed structure having an average foam diameter of from 1 to 500 µm) does not refer to a compression repulsive force of the foamed material.

Therefore, an object of the invention is to provide such a dustproof material that exerts excellent dustproof property and has excellent flexibility capable of following a minute clearance, and to provide a dustproof structure using the dustproof material.

Another object of the invention is to provide such a foamed dustproof material (hereinafter referred to as a dustproof material) that can be suitably used upon mounting an optical member on a product having a thin profile, and to provide a dustproof structure using the dustproof material.

As a result of earnest investigations made by the inventors for attaining the aforementioned objects, it has been found that the use of a dustproof material formed of a foamed body having particular characteristics exerts excellent dustproof property and can successfully follow a minute clearance. The invention has been made based on the findings.

That is, the present invention has the following constitution.
(1)Use of a foamed material as a dustproof material which comprises a foamed body, wherein the foamed body has an average cell diameter of from 10 to 90 µm, a load against repulsion upon compressing to 50% of from 0.1 to 3.0 N/cm², and an apparent density of from 0.01 to 0.10 g/cm³ and wherein the foamed body comprises a mixture containing a thermoplastic elastomer and a thermoplastic polymer other than the thermoplastic elastomer.
(2) Use of the foamed material according to the above (1), wherein the foamed body has a closed cell structure or a semi-closed and semi-open cell structure.
(3) Use of the foamed material according to the above (1) or (2), wherein the material further comprises a pressure sensitive adhesive layer on one surface or both surfaces of the foamed body.
(4) Use of the foamed material according to the above (3), wherein the pressure sensitive adhesive layer is formed on the foamed body through a film layer.
(5) Use of the foamed material according to the above (3) or (4), wherein the pressure sensitive adhesive layer comprises an acrylic pressure sensitive adhesive.
(6) Use of the foamed material according to any one of the above (1) to (5), wherein the foamed body is obtainable by a process comprising steps of:
   impregnating a thermoplastic polymer with an inert gas at a high pressure of 6 MPa or more; and
   decreasing the pressure.
(7) Use of the foamed material according to the above (6), wherein the foamed body is obtainable by a process comprising steps of:
   impregnating a non-foamed molded article comprising a thermoplastic polymer with an inert gas at a high pressure of 6MPa or more; and
   decreasing the pressure.
(8) Use of the foamed material according to the above (6), wherein the foamed body is obtainable by a process comprising steps of:
   impregnating a molten thermoplastic polymer with an inert gas under a pressurized state; and
   molding the thermoplastic polymer while decreasing the pressure.
(9) Use of the foamed material according to any one of the above (6) to (8), wherein the process further comprises a step of heating after decreasing the pressure.
(10) Use of the foamed material according to any one of the above (6) to (9), wherein the inert gas is carbon dioxide.
(11) Use of the foamed material according to any one of claims 6 to 10, wherein the inert gas is in a supercritical state upon impregnating.
(12) Use of the foamed material according to any one of the above (1) to (11), for mounting an optical member on a prescribed site.
(13) Use of a dustproof structure for mounting an optical member on a prescribed site, wherein the structure comprises the optical member mounted on the site through the use of the foamed dustproof material according to any one of the above (1) to (11).
(14) Use of the foamed dustproof material according to any one of the above (1) to (11), for preventing a toner from leaking from a toner cartridge.

The foamed dustproof material may be preferably used upon mounting an optical member on a prescribed site, and upon preventing a toner from leaking from a toner cartridge.

The invention, also relates to the use of a dustproof structure for mounting an optical member on a prescribed site, and the dustproof structure comprises the optical member mounted on the site through the use of the formed dustproof material according to the invention.

The dustproof material exerts excellent dustproof property and has excellent flexibility capable of following a minute clearance. The dustproof material can also be suitably used upon mounting an optical member on a product having a thin profile.

### BRIEF DESCRIPTION OF THE DRAWINGS

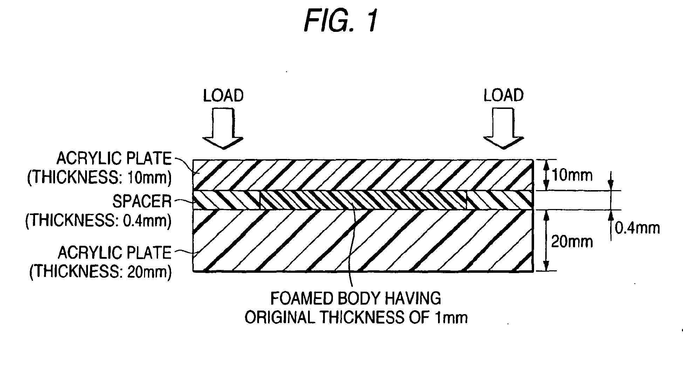

Fig. 1 is a schematic cross sectional view showing an evaluation method for clearance followability in Examples.

### DETAILED DESCRIPTION OF THE INVENTION

The invention will be described below in detail.

### [Foamed Body constituting Foamed Dustproof Material]

The foamed dustproof material, i.e., a dustproof material (sealant) composed of a foamed body, is constituted by a foamed body having an average cell diameter of from 10 to 90 µm, a load against repulsion upon compressing to 50% (i.e., a repulsive force upon compressing to 50%) of from 0.1 to 3.0 N/cm², and an apparent density of from 0.01 to 0.10 g/cm³.

The upper limit of the average cell diameter of the foamed body set to 90 µm (preferably 80 µm) improves dustproof property and improves light shielding property. The lower limit of the average cell diameter of the foamed body set to 10 µm (preferably 20 µm) improves cushioning property (shock absorption property).

The upper limit of the load against repulsion upon compressing to 50% (i.e., the repulsive force upon compressing to 50%) of the foamed body set to 3.0 N/cm² (preferably 2.0 N/cm², and more preferably 1.8 N/cm²) can prevent problems due to repulsion of the foamed dustproof material from occurring even in a narrow clearance. The lower limit of the load against repulsion upon compressing to 50% of the foamed body set to 0.1 N/cm² (preferably 0.2 N/cm²) can ensure excellent dustproof property.

The upper limit of the apparent density of the foamed body set to 0.10 g/cm³ (preferably 0.08 g/cm³) can improve flexibility. The lower limit of the apparent density of the foamed body set to 0.01 g/cm³ (preferably 0.02 g/cm³) can ensure excellent dustproof property.

The foamed body is not limited in composition and cell structure as far as the aforementioned characteristics are satisfied. The cell structure is preferably a closed cell structure or a semi-closed and semi-open cell structure (i.e., a cell structure having a closed cell structure and an open cell structure mixed with each other with the ratio thereof being not limited), and such a cell structure is particularly preferred that the foamed body has 80% or more (further preferably 90% or more) of a closed cell structure part.

In the foamed dustproof material, a process for producing the foamed body may be those processes that have been ordinarily used for foam molding, such as a physical process and a chemical process. In the ordinary physical process, a low boiling point liquid (foaming agent), such as a chlorofluorocarbon compound and a hydrocarbon compound, is dispersed in a polymer, and then heated to evaporate the foaming agent to form cells. In the ordinary chemical process, cells are formed with a gas generated through thermal decomposition of a compound (foaming agent) added to a polymer base, so as to obtain a foamed body. Under consideration of the current environmental issues, the physical process is preferred.

The foamed body can be produced, for example, by the following processes. Constitutional components including natural or synthetic rubber (such as a chloroprene rubber-ethylene-propylene terpolymer), a vulcanizing agent, a foaming agent and a filler are kneaded in a kneading machine, such as a Banbury mixer and a pressure kneader, to obtain a kneaded mixture. The kneaded mixture is then molded into a sheet form or a rod form while being continuously kneaded in a calender machine, an extruder or a conveyer belt casting machine, and then vulcanized and foamed by heating to obtain a vulcanized foamed body.

The resulting vulcanized foamed body may be cut into a prescribed shape depending on necessity. In alternative, constitutional components including natural or synthetic rubber, a vulcanizing agent, a foaming agent and a filler are kneaded with mixing rolls to obtain a kneaded composition, and the kneaded composition is then subjected to vulcanization, foaming and molding in a mold by a batchwise process.

A process using a high-pressure inert gas as a foaming agent is preferably used since a foamed body having a small cell diameter and a high cell density can be obtained. For example, such a process is preferred that a thermoplastic polymer is impregnated with an inert gas at a high pressure, and then the pressure is decreased to form a foamed body.

In the aforementioned physical foaming process, problems may arise due to inflammability, toxicity and influences on the environments, such as ozone layer destruction. In the aforementioned chemical foaming process, residues of the foaming gas remain in the resulting foamed body, and thus problems may arise due to contamination with a corrosive gas and impurities in the gas particularly in the purposes of electronic devices requiring low contamination property.

Carbon dioxide is preferably used as the foaming agent since a clean foamed body with less amounts of impurities can be obtained.

It has been reported that the physical and chemical foaming processes are difficult to provide a fine cell structure, particularly fine cells having a diameter of 300 µm or less.

As having been described, the foamed body is preferably produced by a production process using an inert gas at a high pressure as a foaming agent, and such a process is preferably employed that a thermoplastic polymer is impregnated with an inert gas at a high pressure, and the pressure is decreased. Upon impregnating with an inert gas, a non-foamed molded article having been previously molded is impregnated with an inert gas, or in alternative, a molten thermoplastic polymer is impregnated with an inert gas under a pressurized state.

Therefore, preferred examples of the specific production process include a process, in which a thermoplastic polymer is impregnated with an inert gas at a high pressure, and then the pressure is decreased; a process, in which a non-foamed molded article formed of a thermoplastic polymer is impregnated with an inert gas at a high pressure, and then the pressure is decreased; and a process, in which a molten thermoplastic polymer is impregnated with an inert gas under a pressurized state, and the thermoplastic polymer is molded while decreasing the pressure.

### (Thermoplastic Polymer)

The thermoplastic polymer used as a material for the foamed body (resin foamed body) in the invention is not particularly limited as far as it is a polymer exhibiting thermoplastic property and is capable of being impregnated with a high-pressure gas.

Examples of the thermoplastic polymer include an olefin polymer, such as low density polyethylene, medium density polyethylene, high density polyethylene, linear low density polyethylene, polypropylene, a copolymer of ethylene and propylene, a copolymer of ethylene or propylene and other α-olefin and a copolymer of ethylene and an ethylenic unsaturated monomer (e.g., vinyl acetate, acrylic acid, an acrylate ester, methacrylic acid, a methacrylate ester and vinyl alcohol) ; a styrene polymer, such as polystyrene and an acrylonitrile-butadiene-styrene copolymer (ABS resin); polyamide, such as 6-nylon, 66-nylon and 12-nylon; polyamideimide; polyimide; a polyetherimide; an acrylic resin, such as polymethyl methacrylate; polyvinyl chloride; polyvinyl fluoride; an alkenylaromatic resin; polyester, such as polyethylene terephthalate and polybutylene terephthalate; polycarbonate, such as bisphenol A polycarbonate; polyacetal; and polyphenylene sulfide.

The thermoplastic resin also includes a thermoplastic elastomer, which exhibits rubber nature at ordinary temperature and exhibits thermoplasticity at an elevated temperature.

Examples of the thermoplastic elastomer include an olefin elastomer, such as an ethylene-propylene copolymer, an ethylene-propylene-diene copolymer, an ethylene-vinyl acetate copolymer, polybutene, polyisobutylene and chlorinated polyethylene; a styrene elastomer, such as a styrene-butadiene-styrene copolymer a styrene-isoprene-styrene copolymer, a styrene-isoprene-butadiene-styrene copolymer and hydrogenated polymers thereof; a thermoplastic polyester elastomer; a thermoplastic urethane elastomer; and a thermoplastic acrylic elastomer.

The thermoplastic elastomers have a glass transition temperature lower than room temperature (for example, 20°C or lower), and thus are considerably excellent in flexibility and shape followability as a dustproof material and a sealant.

The thermoplastic polymer may be used solely or as a mixture of two or more kinds thereof. Any of a thermoplastic elastomer, a thermoplastic polymer other than the thermoplastic elastomer, and mixtures of a thermoplastic elastomer and a thermoplastic polymer other than the thermoplastic elastomer may be used as the material for the foamed body (i.e., the thermoplastic polymer).

Examples of the mixture of a thermoplastic elastomer and a thermoplastic polymer other than the thermoplastic elastomer include a mixture of an olefin elastomer, such as an ethylene-propylene copolymer, and an olef in polymer, such as polypropylene. In the case where the mixture of a thermoplastic elastomer and a thermoplastic polymer other than the thermoplastic elastomer is used, the mixing ratio thereof (former/later) may be about from 1/99 to 99/1, preferably about from 10/90 to 90/10, and more preferably about from 20/80 to 80/20.

### (Inert Gas)

The inert gas that can be used in the invention is not particularly limited as far as it is inert to the thermoplastic polymer and can be impregnated therein, and examples thereof include carbon dioxide, nitrogen and air. The gases may be used as a mixture. Among these, carbon dioxide is preferably used since it can be impregnated in the thermoplastic polymer as the material for the foamed body in a large amount at a high impregnation speed.

The inert gas is preferably in a supercritical state upon impregnating in the thermoplastic polymer. The solubility of the gas in the thermoplastic polymer is increased in a supercritical state to enable impregnation in a high concentration. Upon suddenly decreasing the pressure after the impregnation, cell nuclei are formed in a large amount owing to the high concentration, whereby fine cells can be obtained since the density of cells formed as a result of growth of the cell nuclei becomes larger with equal porosities. Carbon dioxide has a critical temperature of 31°C and a critical pressure of 7.4 MPa.

An additive may be added to the thermoplastic polymer depending on necessity upon molding the foamed body. The kind of the additive is not particularly limited, and various kinds of additives that have been ordinarily used for foam molding can be used.

Examples of the additive include a cell nucleating agent, a crystalline nucleating agent, a plasticizer, a lubricating agent, a coloring agent (such as a pigment and a dye) , an ultraviolet ray absorbent, an antioxidant, an antiaging agent, a filler, a reinforcing agent, a flame retardant, an antistatic agent, a surface active agent, a vulcanizing agent and a surface treating agent.

The addition amount of the additive may be appropriately selected within such a range that the formation of cells is not impaired, which may be an addition amount used upon molding an ordinary thermoplastic polymer, such as a thermoplastic elastomer.

The lubricating agent used is not particularly limited as far as it exerts an effect on improvement in flowability of the thermoplastic polymer, and examples thereof include a hydrocarbon lubricating agent, such as liquid paraffin, paraffin wax, micro wax and polyethylene wax; an aliphatic acid lubricating agent, such as stearic acid, behenic acid and 12-hydroxystearic acid; and an ester lubricating agent, such as butyl stearate, stearic monoglyceride, pentaerythritol tetrastearate, hardened castor oil and stearyl stearate.

### (Production of Foamed Body)

As the production process for producing the foamed body by impregnating a thermoplastic polymer with an inert gas at a high pressure, specifically such a process may be conducted that contains an impregnating step of impregnating a thermoplastic polymer with an inert gas at a high pressure, a depressurizing step of decreasing the pressure after the impregnating step to foam the polymer, and depending on necessity, a heating step of heating to grow the cells. In this case, a non-foamed molded article having been previously molded may be impregnated with the inert gas, or in alternative, amolten thermoplastic polymer is impregnated with the inert gas under a pressurized state, followed by molding while decreasing the pressure. These process steps may be carried out as a batchwise process or a continuous process.

According to the batchwise process, the foamed body can be produced in the following manner. A thermoplastic polymer, such as a polyolefin resin or a thermoplastic elastomer, is extruded by using an extruder, such as a uniaxial extruder or a biaxial extruder, to form a non-foamed molded article (such as a resin sheet for forming a foamed body). In alternative, a thermoplastic polymer, such as a polyolefin resin or a thermoplastic elastomer, is uniformly mixed by using a kneader provided with a roller, a cam, a kneader or a Banbury blade, and the polymer is press-molded by using a pressing machine with heated plates to form a non-foamed molded article (such as a resin sheet for forming a foamedbody) containing the thermoplastic polymer as a base resin.

The resulting non-foamed molded article is placed in a pressure resistant container, to which an inert gas is then introduced at a high pressure, so as to impregnate the non-foamed molded article with the inert gas.

In this case, the shape of the non-foamed molded article is not particularly limited, and may be any of a roll form, a plate form and the like. The inert gas may be introduced continuously or discontinuously. After the article is sufficiently impregnated with the inert gas at a high pressure, the pressure is released (ordinarily to the atmospheric pressure) to generate cell nuclei in the base resin. The cell nuclei may be grown by leaving at room temperature or may be grown by heating depending on necessity.

The method of heating may be those having been known and ordinarily used, such as a water bath, an oil bath, a heat roll, a hot air oven, a far-infrared ray, a near-infrared ray and a microwave. After growing the cells, the article is quickly cooled, for example, with cold water to fix the shape thereof.

According to the continuous process, the foamed body can be produced in the following manner. An inert gas is injected at a high pressure to a thermoplastic polymer while kneading by using an extruder, such as a uniaxial extruder or a biaxial extruder, and after the thermoplastic polymer is sufficiently impregnated with the inert gas, the polymer is extruded to release the pressure (ordinarily to the atmospheric pressure) to effect foaming and molding simultaneously with each other, followed by growing cells by heating depending on necessity. After growing the cells, the article is quickly cooled, for example, with cold water to fix the shape thereof.

The pressure in the gas impregnating step may be 6 MPa or more (for example, about from 6 to 100 MPa), and preferably 8 MPa or more (for example, about from 8 to 100 MPa). In the case where the pressure is lower than 6 MPa, cells are grown significantly upon foaming to provide a too large cell diameter, and thus a smaller average cell diameter (average cell (bubble) diameter) within the aforementioned range cannot be obtained to impair the dustproof property.

This is because the impregnated amount of the gas is relatively small with a low pressure in comparison to the case of a high pressure, and the forming rate of cell nuclei is lowered to increase the number of cell nuclei thus formed, whereby the gas amount per one cell is rather increased to enlarge the cell diameter extremely.

In the pressure range of lower than 6 MPa, furthermore, there is such a tendency that a slight change in impregnation pressure brings about large variations in cell diameter and cell density, and thus the cell diameter and the cell density are difficultly controlled.

The temperature in the gas impregnating step varies depending on the species of the inert gas and the thermoplastic polymer used and can be selected from wide ranges. Under consideration of operationality, the temperature may be about from 10 to 350°C. For example, in the case where a non-foamed molded article having, for example, a sheet form is impregnated with an inert gas, the impregnation temperature in a batch process may be about from 10 to 200°C, and preferably about from 40 to 200°C.

In the case where a molten polymer impregnated with an inert gas is extruded to effect foaming and molding simultaneously with each other, the impregnation temperature in a continuous process is generally about from 60 to 350°C.

In the case where carbon dioxide is used as the inert gas, the temperature upon impregnating is preferably 32°C or more, and more preferably 40°C or more, in order to maintain the supercritical state.

The depressurizing rate in the depressurizing step is not particularly limited and is preferably about from 5 to 300 MPa/sec for obtaining uniform fine cells. The heating temperature in the heating step is, for example, about from 40 to 250°C, and preferably about from 60 to 250°C.

The average cell diameter, the load against repulsion upon compressing to 50% and the apparent density can be adjusted, for example, by appropriately setting the operation conditions on the gas impregnating step, such as the temperature, the pressure and the time, the operation conditions on the depressurizing step, such as the depressurizing rate, the temperature and the pressure, and the heating temperature after the depressurizing step, depending on the species of the inert gas and the thermoplastic polymer or the thermoplastic elastomer used.

### [Foamed Dustproof Material]

The foamed dustproof material (foamed sealant) is constituted by a foamed body having the aforementioned particular characteristic features. The foamed body may constitute the foamed dustproof material solely by itself to exert the functions thereof effectively, and may be combined with another layer or substrate (particularly a pressure sensitive adhesive layer) provided on one surface or both surfaces thereof to constitute the foamed dustproof material.

For example, in the case of the foamed dustproof material having the foamed body with a pressure sensitive adhesive layer on one surface or both surfaces thereof, a member or a part, such as an optical member, can be fixed or preliminarily fixed to an adherend.

Accordingly, the foamed dustproof material preferably has a pressure sensitive adhesive layer on at least one surface (i.e., on one surface or both surfaces) of a foamed body constituting the foamed dustproof material.

An adhesive agent (an pressure sensitive adhesive) for forming the pressure sensitive adhesive layer is not particularly limited, and known adhesive agents may be used through appropriate selection, examples of which include an acrylic pressure sensitive adhesive, a rubber adhesive agent (such as a natural rubber adhesive agent and a synthetic rubber adhesive agent), a silicone adhesive agent, a polyester adhesive agent, a urethane adhesive agent, a polyamide adhesive agent, an epoxy adhesive agent, a vinyl alkyl ether adhesive agent and a fluorine adhesive agent. The adhesive agent may be a hot-melt adhesive agent.

The adhesive agent may be used solely or in combination of two or more thereof. The adhesive agent may be any form including an emulsion adhesive agent, a solvent adhesive agent, an oligomer adhesive agent and a solid adhesive agent.

The adhesive agent is preferably an acrylic pressure sensitive adhesive from the standpoint of prevention of contamination of the adherend.

The pressure sensitive adhesive layer may be formed by a method having been known and ordinarily used in the art, and examples thereof include a method of coating an adhesive agent on a prescribed part or surface (coating method), and a method coating an adhesive agent on a releasing film, such as a releasing liner, to form a pressure sensitive adhesive layer, and transferring the pressure sensitive adhesive layer to a prescribed part or surface (transferring method).

Upon forming the pressure sensitive adhesive layer, a coating method having been known in the art may be employed, examples of which include a flow casting method, a roll coater method, a reverse coater method and a doctor blade method.

The pressure sensitive adhesive layer generally has a thickness of about from 2 to 100 µm, and preferably about from 10 to 100 µm. The pressure sensitive adhesive layer is preferably as thin as possible because the thinner pressure sensitive adhesive layer has, on an edge thereof, higher effect of preventing dusts from being adhered. The pressure sensitive adhesive layer may have a single layer structure or an accumulated multi-layer structure.

The pressure sensitive adhesive layer may be formed on the foamed body through another layer (lower layer). Examples of the lower layer include an intermediate layer and an undercoating layer, as well as a base material layer (particularly, a film layer) and another pressure sensitive adhesive layer.

In the case where the pressure sensitive adhesive layer may be only one surface (one side) of the foamed body, another layer may be formed on the other surfaces, examples of which include a pressure sensitive adhesive layer of another kind and a base material layer.

The shape and the thickness of the foamed dustproof material are not particularly limited and may be appropriately selected depending on purposes. For example, the thickness of the foamed dustproof material may be about from 0.5 to 5 mm, and preferably from 0.8 to 3 mm.

The foamed dustproof material is generally commoditized after processing into various shapes corresponding to devices, to which the dustproof material is to be applied.

The foamed dustproof material has extremely fine cells, a low load against repulsion upon compressing to 50% with high flexibility, and has a low apparent density, owing to the aforementioned characteristic features. That is, excellent flexibility capable of following a minute clearance is exerted with the small cell diameter maintained, and thereby the material can follow aminute clearance while the dustproof capability, which is primarily demanded. Furthermore, the material is highly foamed and is light in weight.

The foamed dustproof material is excellent in flexibility owing to the foamed body containing a thermoplastic polymer, such as a thermoplastic elastomer, and is clean without harmful substances generated or contaminating substance remained owing to the use of an inert gas, such as carbon dioxide, as a foaming agent, which is different from the conventional physical and chemical foaming processes.

Therefore, the foamed dustproof material is useful as a dustproof material for mounting (installing) various kinds of members and parts (for example, an optical member) on a prescribed site. In particular, the foamed dustproof material can be suitably used even in the case where a small sized member or part (for example, a small sized optical member) is mounted on a product having a thin profile.

Examples of the optical member capable of being mounted (installed) by utilizing the foamed dustproof material include an image displaying member (in particular, an image displaying member with small size) to be mounted on an image displaying device, such as a liquid crystal display, an electroluminescence display and a plasma display, and a camera and a lens (in particular, a camera and a lens with small size) to be fixed to a mobile communication device, such as a potable phone and a portable information device.

The foamed dustproof material can also be used as a dustproof material for preventing a toner from leaking from a toner cartridge. Examples of the toner cartridge capable of being attached by utilizing the foamed dustproof material include a toner cartridge used in an image forming device, such as a duplicator and a printer.

### (Structure having Optical Member)

In the structure having an optical member (i.e., the structure having an optical member mounted on a prescribed site), the optical member is mounted on (installed in) the prescribed site through the foamed dustproof material. Examples of the structure include an image displaying device, such as a liquid crystal display, an electroluminescence display and a plasma display (in particular, an image displaying device having a small sized image displaying member mounted thereon as an optical member) , and a mobile communication device, such as a potable phone and a portable information device, having a camera or a lens (in particular a camera and a lens with small size) mounted thereon. The structure may be a product having a thinner profile than the conventional products and is not particularly limited in thickness and size.

### (Dustproof Structure)

The dustproof structure (i.e., the dustproof structure having an optical member mounted on a prescribed site) has such a structure that the optical member is mounted through the foamed dustproof material. The dustproof structure is not particularly limited in other structures than the structure where the foamed dustproof material is used upon mounting (installing) the optical member on the prescribed site.

Therefore, the optical member and the prescribed site, on which the optical member is mounted, are not particularly limited and can be appropriately selected. Examples of the optical member include those having been enumerated hereinabove.

### EXAMPLES

The invention will be described in more detail with reference to the following examples, but the invention is not construed as being limited thereto.

The average cell diameter, the load against repulsion upon compressing to 50% (i.e., a repulsive force upon compressing to 50%), and the apparent density of the foamed body were obtained in the following manner.

### (Average Cell Diameter)

An enlarged image of a cell part of a foamed body was imported by a digital microscope (VH-8000, a trade name, produced by Keyence Corp.), and analyzed by using an image analysis software (Win ROOF, a trade name, produced by Mitani Corp.) to obtain an average cell diameter (µm).

### (Load against Repulsion upon Compressing to 50%)

The load against repulsion upon compressing to 50% was measured according to the method for measuring compression hardness defined in JIS K6767. Specifically, plural pieces of test specimens cut out into a circular shape having a diameter of 30 mm were accumulated to a thickness of about 25 mm, and a stress per unit area (cm²) measured upon compressing the accumulated specimens to 50% at a compression rate of 10 mm/min was designated as the load against repulsion upon compressing to 50% (N/cm²).

### (Apparent Density)

A foamed body was punched out with a punching die of 40 mm x 40 mm, and the specimen thus punched out was measured for dimension. The specimen was also measured for thickness by using a 1/100 dial gauge with a diameter of a measuring probe of 20 mm. The volume of the foamed body was calculated from the measured values.

The weight of the foamed body was measured with an even balance with minimal measurable weight of 0.01 g or less. The apparent density (g/cm³) of the foamed body was calculated from these values.

### Example 1

45 parts by weight of polypropylene, 45 parts by weight of a polyolefin elastomer, 10 parts by weight of polyethylene, 10 parts by weight of magnesium hydroxide and 10 parts by weight of carbon were kneaded in a biaxial kneader produced by Japan Steel Works, Ltd. (JSW) at a temperature of 200°C, and extruded into a strand form, which was then cooled with water and molded into pellets. The pellets were placed in a uniaxial extruder produced by Japan Steel Works, Ltd., to which a carbon dioxide gas was injected under an atmosphere of 220°C at a pressure of 13 MPa, which was lowered to 12 MPa after completing the injection.

The carbon dioxide gas was injected in a ratio of 5% by mass based on the total amount of the polymer. After sufficiently saturating the carbon dioxide gas, the mixture was cooled to a temperature suitable for foaming, and then extruded from a die to obtain a foamed body. The foamed body thus obtained had an average cell diameter of 70 µm, a load against repulsion upon compressing to 50% (i.e., a repulsive force upon compressing to 50%) of 1.5 N/cm², and an apparent density of 0.05 g/cm³.

### Example 2

30 parts by weight of polypropylene, 60 parts by weight of a polyolefin elastomer, 10 parts by weight of polyethylene, 10 parts by weight of magnesium hydroxide and 10 parts by weight of carbon were kneaded in a biaxial kneader produced by Japan Steel Works, Ltd. at a temperature of 200°C, and extruded into a strand form, which was then cooled with water and molded into pellets. The pellets were placed in a uniaxial extruder produced by Japan Steel Works, Ltd., to which a carbon dioxide gas was injected under an atmosphere of 220°C at a pressure of 13 MPa, which was lowered to 12 MPa after completing the injection.

The carbon dioxide gas was injected in a ratio of 5% by mass based on the total amount of the polymer. After sufficiently saturating the carbon dioxide gas, the mixture was cooled to a temperature suitable for foaming, and then extruded from a die to obtain a foamed body. The foamed body thus obtained had an average cell diameter of 80 µm, a repulsive force upon compressing to 50% of 1.0 N/cm², and an apparent density of 0.05 g/cm³.

### Example 3

60 parts by weight of polypropylene, 30 parts by weight of a polyolefin elastomer, 10 parts by weight of polyethylene, 10 parts by weight of magnesium hydroxide, 10 parts by weight of carbon and 1 part by weight of stearic acid monoglyceride were kneaded in a biaxial kneader produced by Japan Steel Works, Ltd. at a temperature of 200°C, and extruded into a strand form, which was then cooled with water and molded, into pellets. The pellets were placed in a uniaxial extruder produced by Japan Steel Works, Ltd., to which a carbon dioxide gas was injected under an atmosphere of 220°C at a pressure of 13 MPa, which was lowered to 12 MPa after completing the injection.

The carbon dioxide gas was injected in a ratio of 5% by mass based on the total amount of the polymer. After sufficiently saturating the carbon dioxide gas, the mixture was cooled to a temperature suitable for foaming, and then extruded from a die to obtain a foamed body. The foamed body thus obtained had an average cell diameter of 80 µm, a repulsive force upon compressing to 50% of 2.4 N/cm², and an apparent density of 0.03 g/cm³.

### Comparative Example 1

A foamed body mainly containing polyurethane having an average cell diameter of 70 µm, a repulsive force upon compressing to 50% of 8 N/cm², and an apparent density of 0.4 g/cm³ was used.

### Comparative Example 2

A foamed body mainly containing polyurethane having an average cell diameter of 250 µm and an apparent density of 0.03 g/cm³ was compressed to 50% of the original thickness, and then hot-molded to obtain a molded article. The molded article had an average cell diameter of 90 µm, a repulsive force upon compressing to 50% of 5 N/cm², and an apparent density of 0.06 g/cm³.

### Comparative Example 3

A foamed body mainly containing ethylene-propylene-diene rubber (EPDM) having an average cell diameter of 400 µm, a repulsive force upon compressing to 50% of 0.5 N/cm², and an apparent density of 0.09 g/cm³ was used.

### (Evaluation)

The foamed bodies obtained in Examples 1 to 3 and Comparative Examples 1 to 3 were evaluated for air permeability upon compressing to 50% and clearance followability by the following methods for measuring the air permeability upon compressing to 50% and the clearance followability. The evaluation results are shown in Table 1 below.

### (Method for measuring Air Permeability upon compressing to 50%)

An air permeability upon compressing to 50% (cc/cm²/sec) was measured by using a frazil-type air permeability tester according to JIS L1096.

### (Method for measuring Clearance Followability)

A foamed body was placed in a jig shown in Fig. 1, and the state of deformation of the acrylic plate on the upper surface was visually observed. Specifically, spacers having a thickness of 0.4 mm were placed on both end parts of an acrylic plate having a thickness of 20 mm, and a foamed body having a thickness of 1 mm was placed on the central part between the spacers.

An acrylic plate having a thickness of 10 mm was placed thereon, and a load was applied from the side of the acrylic plate (having a thickness of 10 mm) on the upper surface at the positions corresponding to the spacers on both the end parts, so as to compress the foamed body. The presence or absence of deformation of the acrylic plate on the upper surface at this time was visually observed.

**Table 1**

| | Example | | | Comparative Example | | |
|---|---|---|---|---|---|---|
| | 1 | 2 | 3 | 1 | 2 | 3 |
| Apparent density (g/cm³) | 0.05 | 0.05 | 0.03 | 0.4 | 0.06 | 0.09 |
| Repulsive force upon compressing to 50% (N/cm²) | 1.5 | 1.0 | 2.4 | 8 | 5 | 0.5 |
| Average cell diameter (µm) | 70 | 80 | 80 | 70 | 90 | 400 |
| Air permeability upon compressing to 50% (cc/cm²/sec) | could not measured | could not measured | could not measured | could not measured | could not measured | 0.04 |
| Clearance followability | fair | fair | fair | deformation observed | deformation observed | fair |

The foamed bodies of Example 1 and Comparative Example 1 were evaluated for cleanliness by analysis of an inorganic gas generating amount, analysis of an organic gas generating amount and analysis of ion ingredient amounts extracted with warm water. The results are shown in Tables 2 to 4 below.

### (Analysis of Inorganic Gas generating Amount)

A test piece having an area of 10 cm² and a thickness of about 1mm was cut out from the specimen and weighed on a specimen boat for a combustion device. The test piece was heated at 100°C for 1 hour by using the combustion device, and the generating gas was collected in a collecting liquid (pure water). The collecting liquid was subjected to quantitative analysis by using ion chromatography (DX-500, a trade name, produced by Dionex Corp.).

### (Analysis of Organic Gas generating Amount)

A test piece having an area of 50 cm² and a thickness of about 1mm was cut out from the specimen and weighed in a vial container. After sealing hermetically the container, the test piece was heated at 100°C for 1 hour by using a head space autosampler, and the generating gas in a heated state was subjected to quantitative analysis by using gas chromatography (HP6980, a trade name, produced by Hewlett-Packard Co.).

### (Analysis of Ion Ingredient Amounts extracted with Warm water)

A test piece having an area of 50 cm² and a thickness of about 1mm was cut out from the specimen and weighed in a container formed of a polymethylpentene (PMP) resin. 50 mL of pure water was added to the container, and warm water extraction was carried out in a dryer at 100°C for 2 hours. The extract was subjected to quantitative

### analysis by using ion chromatography (DX-500, a trade name, produced by Dionex Corp.)

**Table 2**

| Inorganic Gas generating Amount (ng/cm²) | | | | | | |
|---|---|---|---|---|---|---|
| Test piece | Cl⁻ | NO⁻₂ | NO₃⁻ | PO₄³⁻ | SO₄²⁻ | NH₄⁺ |
| Example 1 | < 4.6 | < 13 | < 24 | < 74 | < 24 | < 1.6 |
| Comparative Example 1 | 67.0 | < 13 | < 24 | < 74 | < 24 | 7.9 |

| | | | | | | |
|---|---|---|---|---|---|---|
| Note: Symbol < means values lower than the detection limit. | | | | | | |

**Table 3**

| Organic Gas generating Amount (ng/cm²) | | | |
|---|---|---|---|
| Test piece | Toluene | Other component | Total |
| Example 1 | 1.5 | 20 | 22 |
| Comparative Example 1 | 9.4 | 860 | 870 |

| | | | |
|---|---|---|---|
| Note: Symbol < means values lower than the detection limit. | | | |

**Table 4**

| Ion Ingredient Amounts extracted with Warm Water (ng/cm²) | | | | | | |
|---|---|---|---|---|---|---|
| Test piece | Cl⁻ | NO₂⁻ | NO₃⁻ | PO₄³⁻ | SO₄²⁻ | NH₄⁺ |
| Example 1 | 73 | < 13 | < 24 | < 74 | < 24 | 1.8 |
| Comparative Example 1 | 850 | < 13 | < 24 | < 74 | < 24 | 29 |

| | | | | | | |
|---|---|---|---|---|---|---|
| Note: Symbol < means values lower than the detection limit. | | | | | | |

It was confirmed from the results shown in Table 1 that the foamed bodies of Examples 1 to 3 had no air permeability upon compressing to 50% to exert excellent dustproof property. The foamed bodies of Examples 1 to 3 exerted good clearance followability even when they were compressed to a thickness of 0.4 mm, and thus it was confirmed that they did not deform an optical member, which was mounted on a prescribed site with a minute clearance between the optical member and the prescribed site.

Furthermore, it was confirmed that the foamed dustproof material could be suitably used as a dustproof material for preventing a toner from leaking from a toner cartridge.

It was also confirmed from the results shown in Tables 2 to 4 that the foamed bodies of Examples 1 to 3 were clean foamed bodies with less amounts of impurities.

## Claims

1. Use of a foamed material as a dustproof material which comprises a foamed body, wherein the foamed body has an average cell diameter of from 10 to 90 µm, a load against repulsion upon compressing to 50% of from 0.1 to 3.0 N/cm², and an apparent density of from 0.01 to 0.10 g/cm³ and wherein the foamed body comprises a mixture containing a thermoplastic elastomer and a thermoplastic polymer other than the thermoplastic elastomer.

2. Use of the foamed material according to claim 1, wherein the foamed body has a closed cell structure or a semi-closed and semi-open cell structure.

3. Use of the foamed material according to claim 1 or 2, wherein the material further comprises a pressure sensitive adhesive layer on one surface or both surfaces of the foamed body.

4. Use of the foamed material according to claim 3, wherein the pressure sensitive adhesive layer is formed on the foamed body through a film layer.

5. Use of the foamed material according to claim 3 or 4, wherein the pressure sensitive adhesive layer comprises an acrylic pressure sensitive adhesive.

6. Use of the foamed material according to any of the claims 1 to 5, wherein the mixture further contains a lubricant agent selected from the group consisting of a hydrocarbon lubricant agent, an aliphatic acid lubricant agent, and ester lubricant agent.

7. Use of the foamed material according to any one of claims 1 to 6, wherein the foamed body is obtainable by a process comprising steps of:
impregnating a thermoplastic polymer with an inert gas at a high pressure of 6 MPa or more; and
decreasing the pressure.

8. Use of the foamed dustproof material according to claim 7, wherein, the foamed body is obtainable by a process comprising steps of:
impregnating a non-foamed molded article comprising a thermoplastic polymer with an inert gas at a high pressure of 6 MPa or more; and
decreasing the pressure.

9. Use of the foamed material according to claim 7, wherein the foamed body is obtainable by a process comprising steps of:
impregnating a molten thermoplastic polymer with an inert gas under a pressurized state; and
molding the thermoplastic polymer while decreasing the pressure.

10. Use of the foamed material according to any one of claims 7 to 9, wherein the process further comprises a step of heating after decreasing the pressure.

11. Use of the foamed material according to any one of claims 7 to 10, wherein the inert gas is carbon dioxide.

12. Use of the foamed material according to any one of claims 7 to 11, wherein the inert gas is in a supercritical state upon impregnating.

13. Use of the foamed dustproof material according to any one of claims 1 to 12, for mounting an optical member on a prescribed site.

14. Use of a dustproof structure for mounting an optical member on a prescribed site, wherein the structure comprises the optical member mounted on the site through the use of foamed material according to any one of claims 1 to 12.

15. Use of the foamed material according to any one of claims 1 to 12, for preventing a toner from leaking from a toner cartridge.

## Patentansprüche

1. Verwendung von einem geschäumten Material als staubdichtes Material, das einen geschäumten Körper umfasst, wobei der geschäumte Körper einen durchschnittlichen Zellendurchmesser von 10 bis 90 µm, eine Rückform-Widerstandskraft nach einem Zusammendrücken bis auf 50 % von 0,1 bis 3,0 N/cm² und eine Fülldichte von 0,01 bis 0,10 g/cm³ aufweist, und wobei der geschäumte Körper eine Mischung aus einem thermoplastischen Elastomer und einem thermoplastischen Polymer, das sich von dem thermoplastischen Elastomer unterscheidet, umfasst.

2. Verwendung von dem geschäumten Material nach Anspruch 1, wobei der geschäumte Körper eine geschlossene Zellstruktur oder eine halb geschlossene und halb offene Zellstruktur aufweist.

3. Verwendung von dem geschäumten Material nach Anspruch 1 oder 2, wobei das Material weiter eine druckempfindliche Klebstoffschicht auf einer Oberfläche oder beiden Oberflächen des geschäumten Körpers umfasst.

4. Verwendung von dem geschäumten Material nach Anspruch 3, wobei die druckempfindliche Klebstoffschicht auf dem geschäumten Körper durch eine Filmschicht ausgebildet wird.

5. Verwendung von dem geschäumten Material nach Anspruch 3 oder 4, wobei die druckempfindliche Klebstoffschicht einen druckempfindlichen Akrylklebstoff umfasst.

6. Verwendung von dem geschäumten Material nach irgendeinem der Ansprüche 1 bis 5, wobei die Mischung weiter einen Gleitmittelstoff enthält, ausgewählt aus der Gruppe bestehend aus einem Kohlenwasserstoff-Gleitmittelstoff, einem aliphatisch sauren Gleitmittelstoff und einem Ester-Gleitmittelstoff..

7. Verwendung von dem geschäumten Material nach irgendeinem der Ansprüche 1 bis 6, wobei der geschäumte Körper durch einen Prozess erreichbar ist, umfassend die Schritte von:
Imprägnieren eines thermoplastischen Polymers mit einem Inertgas unter einem Hochdruck von 6 MPa oder mehr; und
Verringerung des Drucks.

8. Verwendung von dem geschäumten staubdichten Material nach Anspruch 7, wobei der geschäumte Körper durch einen Prozess erreichbar ist, umfassend die Schritte von:
Imprägnieren eines nicht geschäumten geformten Artikels, der ein thermoplastisches Polymer umfasst, mit einem Inertgas unter einem Hochdruck von 6 MPa oder mehr; und
Verringerung des Drucks.

9. Verwendung des geschäumten Materials nach Anspruch 7, wobei der geschäumte Körper durch einen Prozess erreichbar ist, umfassend die Schritte von:
Imprägnieren eines geschmolzenen thermoplastischen Polymers mit einem Inertgas in einem unter Druck stehenden Zustand; und
Spritzgießen des thermoplastischen Polymers während der Verringerung des Drucks.

10. Verwendung von dem geschäumten Material nach irgendeinem der Ansprüche 7 bis 9, wobei der Prozess weiter den Schritt des Aufheizens nach der Verringerung des Drucks umfasst.

11. Verwendung des geschäumten Materials nach irgendeinem der Ansprüche 7 bis 10, wobei das Inertgas Kohlendioxid ist.

12. Verwendung von dem geschäumten Material nach irgendeinem der Ansprüche 7 bis 11, wobei das Inertgas bei der Imprägnierung in einem überkritischen Zustand ist.

13. Verwendung von dem geschäumten staubdichten Material nach irgendeinem der Ansprüche 1 bis 12, zur Befestigung eines optischen Teils an einem vorgesehenen Anbringort.

14. Verwendung von einer staubdichten Struktur zur Befestigung eines optischen Teils an einem vorgesehenen Anbringort, wobei die Struktur das durch die Verwendung des geschäumten Materials nach irgendeinem der Ansprüche 1 bis 12 an dem Anbringort befestigte optische Teil umfasst.

15. Verwendung von dem geschäumten Material nach irgendeinem der Ansprüche 1 bis 12, um das Durchsickern eines Toners aus einer Tonerpatrone zu verhindern.

## Revendications

1. Utilisation d'un matériau de mousse comme matériau étanche à la poussière qui comprend un corps de mousse, dans laquelle le corps de mousse présente un diamètre moyen d'alvéole de 10 à 90 µm, une charge contre la répulsion lors d'une compression à 50 % de 0,1 à 3,0 N/cm² et une masse volumique apparente de 0,01 à 0,10 g/cm³ et dans laquelle le corps de mousse comprend un mélange contenant un élastomère thermoplastique et un polymère thermoplastique différent de l'élastomère thermoplastique.

2. Utilisation du matériau de mousse selon le revendication 1, dans laquelle le corps de mousse présente une structure à alvéoles fermées ou une structure à alvéoles semi-fermées et semi-ouvertes.

3. Utilisation du matériau de mousse selon la revendication 1 ou 2, dans laquelle le matériau comprend de plus une couche d'adhésif sensible à la pression sur une surface ou les deux surfaces du corps de mousse.

4. Utilisation du matériau de mousse selon la revendication 3, dans laquelle la couche d'adhésif sensible à la pression est formée sur le corps de mousse par l'intermédiaire d'une couche de film.

5. Utilisation du matériau de mousse selon la revendication 3 ou 4, dans laquelle la couche d'adhésif sensible à la pression comprend un adhésif sensible à la pression acrylique.

6. Utilisation du matériau de mousse selon l'une quelconque des revendications 1 à 5, dans laquelle le mélange contient de plus un agent lubrifiant choisi dans le groupe constitué d'un agent lubrifiant hydrocarboné, d'un agent lubrifiant d'acide aliphatique et d'un agent lubrifiant d'ester.

7. Utilisation du matériau de mousse selon l'une quelconque des revendications 1 à 6, dans laquelle le corps de mousse peut être obtenu par un procédé comprenant les étapes :
d'imprégnation d'un polymère thermoplastique avec un gaz inerte à une pression élevée de 6 MPa ou supérieure ; et
de diminution de la pression.

8. Utilisation du matériau de mousse étanche à la poussière selon la revendication 7, dans laquelle le corps de mousse peut être obtenu par un procédé comprenant les étapes :
d'imprégnation d'un article moulé non moussé comprenant un polymère thermoplastique avec un gaz inerte à une pression élevée de 6 MPa ou supérieure ; et
de diminution de la pression.

9. Utilisation du matériau de mousse selon la revendication 7, dans laquelle le corps de mousse peut être obtenu par un procédé comprenant les étapes :
d'imprégnation d'un polymère thermoplastique fondu avec un gaz inerte dans un état pressurisé ; et
de moulage du polymère thermoplastique tout en abaissant la pression.

10. Utilisation du matériau de mousse selon l'une quelconque des revendications 7 à 9, dans lequel le procédé comprend de plus une étape de chauffage après la diminution de la pression.

11. Utilisation du matériau de mousse selon l'une quelconque des revendications 7 à 10, dans lequel le gaz inerte est le dioxyde de carbone.

12. Utilisation du matériau de mousse selon l'une quelconque des revendications 7 à 11, dans lequel le gaz inerte est dans un état supercritique lors de l'imprégnation.

13. Utilisation du matériau de mousse étanche à la poussière selon l'une quelconque des revendications 1 à 12 pour la fixation d'un élément optique sur un site prescrit.

14. Utilisation d'une structure étanche à la poussière pour la fixation d'un élément optique sur un site prescrit, dans laquelle la structure comprend l'élément optique fixé sur le site en utilisant un matériau de mousse selon l'une quelconque des revendications 1 à 12.

15. Utilisation du matériau de mousse selon l'une quelconque des revendications 1 à 12 pour éviter qu'un toner ne fuit à partir d'une cartouche de toner.
